# EUROPÄISCHE PATENTSCHRIFT

(11) **EP 2 545 386 B1**
(45) Veröffentlichungstag und Bekanntmachung des Hinweises auf die Patenterteilung: **07.05.2014**
(21) Anmeldenummer: 11707797.4
(22) Anmeldetag: 28.02.2011
(51) Int. Cl.: G01P 15/12

(54) **BESCHLEUNIGUNGSSENSOR MIT PIEZORESISTIVEM WANDLER**
ACCELEROMETER COMPRISING A PIEZORESISTIVE TRANSDUCER
ACCÉLÉROMÈTRE COMPORTANT UN TRANSDUCTEUR PIÉZORÉSISTIF

(30) Priorität: 10.03.2010 DE 102010010931
(43) Veröffentlichungstag der Anmeldung: 16.01.2013
(73) Patentinhaber: Fraunhofer-Gesellschaft zur Förderung der angewandten Forschung e.V., 80686 München (DE)
(72) Erfinder: KÜLLS, Robert, 32758 Detmold (DE); NAU, Siegfried, 79379 Müllheim (DE)
(74) Vertreter: Rösler, Uwe
(86) Internationale Anmeldenummer: PCT/EP2011/000975
(87) Internationale Veröffentlichungsnummer: WO 2011/110295

(56) Entgegenhaltungen:
- EP-A2- 2 008 965
- US-A- 4 809 552
- US-A- 4 879 914

## Beschreibung

### Technisches Gebiet

Die Erfindung bezieht sich auf einen piezoresistiven Wandler mit einem Fachwerk, das ein Trägerelement aufweist, an dem ein Biegeelement angebracht ist, das relativ zum Trägerelement bei einer Krafteinwirkung eine Verformung erfährt, das eine neutrale Faser besitzt, deren Länge bei der Verformung unveränderlich ist, und an dem ein piezoresistives Material aufweisender Dehnkörper angebracht ist, der die Verformung des Biegelementes in eine elektrisch detektierbare Widerstandsänderung umwandelt.

### Stand der Technik

Es gibt zahlreiche Ausführungen von Wandlern, die in der Lage sind mechanische Messgrößen, wie Beschleunigung, Kraft, Dehnung oder Druck, in eine elektrisch detektierbare Größe, beispielsweise eine Widerstandsänderung, umzusetzen. Dabei ist ein häufig verwendetes Prinzip die Ausnutzung des piezoresistiven Effekts, gemäß dem die Dehnung eines Dehnkörpers aus elektrisch leitfähigem oder halbleitendem Material zu einer Widerstandsänderung desselben führt. Alle bekannten Wandler dieses Typs bestehen, aus physikalischer Notwendigkeit heraus, aus mindestens einem Biegeelement zur mechanischen Aufnahme der Messgröße, mindestens einem Dehnkörper als piezoresistivem Element, zur Wandlung der Verformung des Biegeelements in eine elektrisch detektierbare Widerstandsänderung, und mindestens einem Träger, mit dem die vorgenannten Elemente ein, je nach Bauform, mehr oder weniger komplexes mechanisches Fachwerk ausbilden. Häufig beinhalten die Wandler auch eine oder mehrere Zusatzmassen die am Biegeelement befestigt sind.

Die im Folgenden beschrieben Fachwerke werden aus Gründen einer verständlicheren Beschreibung stets mit genau einem Trägerelement, genau einem Biegeelement und einer Anzahl von piezoresistiven Elementen dargestellt und erläutert. Dies bedeutet nicht, dass Wandler mit einem Fachwerk aus mehreren Trägern oder mehreren Biegeelementen oder nur einem oder besonders vielen piezoresistiven Elementen oder allen diesen Eigenschaften den folgenden Beschreibungen nicht unterliegen.

Dem Fachmann ist durchaus bewusst, dass die strikte Unterscheidung des Fachwerks piezoresistiver Wandler in einen Träger, ein Biegeelement und ein piezoresistives Element vereinfachend ist. Grundsätzlich besitzen alle genannten Elemente die immanenten Eigenschaften eines Biegeelements, d.h. alle diese Elemente verfügen über eine begrenzte Steifigkeit, die einer Kraft, die eine Auslenkung des Fachwerks aus seiner Ruhelage bewirkt, entgegenwirkt. Dennoch kann ein Fachmann die einzelnen Elemente bei einem piezoresistiven Wandler, mehr oder weniger scharf voneinander abgegrenzt, identifizieren. Deswegen kann im Folgenden die strikte Trennung der genannten Elemente beibehalten werden, um somit die Formulierung des Prinzips der Erfindung mit der notwendigen Präzision und Klarheit zu ermöglichen.

Ein piezoresistiver Wandler verfügt über verschiedene Qualitätsmerkmale. Das wichtigste Merkmal ist die Sensitivität, die angibt wie groß die Änderung des Widerstands des piezoresistiven Elements bei gegebener Messgröße ist. Weitere grundlegende Merkmale sind die mechanische Stabilität, sowie die niedrigste mechanische Eigenfrequenz des Fachwerks und somit die Bandbreite des Wandlers. Die Bandbreite eines Wandlers bestimmt wie hoch oder wie gering die Veränderlichkeit einer Messgröße sein kann, so dass der Wandler diese Messgröße im Wesentlichen korrekt wiedergeben kann.

Alle Metalle und viele Halbleiter zeigen den piezoresistiven Effekt. Dieser wird für ein gegebenes Material quantifiziert, indem das Verhältnis seiner relativen Widerstandsänderung zu seiner Dehnung gebildet wird. Dieses Verhältnis wird als k-Faktor bezeichnet. Ein hoher k-Faktor bedeutet, dass der Widerstand eines Materials bei einer gegebenen Dehnung des Materials stark veränderlich, das Material also sehr sensitiv ist. Metalle haben k-Faktoren im Bereich von 2 bis 6, während Halbleiter k-Faktoren von deutlich über 100 aufweisen können. Es ist also vorteilhaft das piezoresistive Element eines piezoresistiven Wandlers aus einem Halbleitermaterial wie beispielsweise dotiertes Silizium, Siliziumcarbid, Diamant, Galliumnitrid, Derivaten von Galliumnitrid oder anderen III-V Halbleiter herzustellen und dabei einen hohen k-Faktor anzustreben.

Die mechanische Stabilität eines piezoresistiven Wandlers hängt unter anderem davon ab, wie stabil seine einzelnen Elemente miteinander und mit dem Träger verbunden sind. Nach dem Stand der Technik kann das Fachwerk aus Träger, Biegeelement und piezoresistivem Element entweder mithilfe von Fügetechniken, wie beispielsweise Kleben, Verschrauben oder verwandten Fügetechniken, verbunden werden, oder aber das genannte Fachwerk wird monolithisch hergestellt. Unter einem monolithischen Verbund von einzelnen Komponenten wird verstanden, dass die Stabilität der Verbindungsflächen der Unterelemente nur unwesentlich geringer ist, als die Stabilität einer beliebigen Fläche durch das Gesamtelement. Unwesentlich bedeutet, dass besagte Verbindungsflächen keine Sollbruchstellen darstellen. Ein alternatives oder ergänzendes Verständnis von der Bedeutung "monolithisch" kann auch darin gesehen werden, dass jede Verbindungsfläche zwischen den Unterelementen durch eine über die gesamte Verbindungsfläche einheitliche und unmittelbare atomare chemische Bindung, im Sinne einer kovalenten, ionischen oder metallischen Bindung, gekennzeichnet ist.

Eine monolithische Herstellung ist für die Stabilität des genannten Fachwerks vorteilhaft, aber nicht notwendig, da so Schwachstellen, die durch das Fügen einzelner Unterelemente entstehen können, vermieden werden.

Um die Anforderung einer hohen Sensitivität und einer hohen mechanischen Stabilität zu erfüllen, sind viele, dem Stand der Technik entsprechenden, piezoresistiven Wandler monolithisch und mit einem piezoresistiven Element aus einem Halbleitermaterial mit hohem k-Faktor gefertigt. Bei gegebenem Material unterscheiden sich diese Wandler hauptsächlich in der Geometrie des Fachwerks aus Träger, Biegeelement und piezoresistivem Element. Diese Unterschiede in der Geometrie des Fachwerks sind maßgebend für die Unterschiede in den Qualitätsmerkmalen der besagten piezoresistiven Wandler.

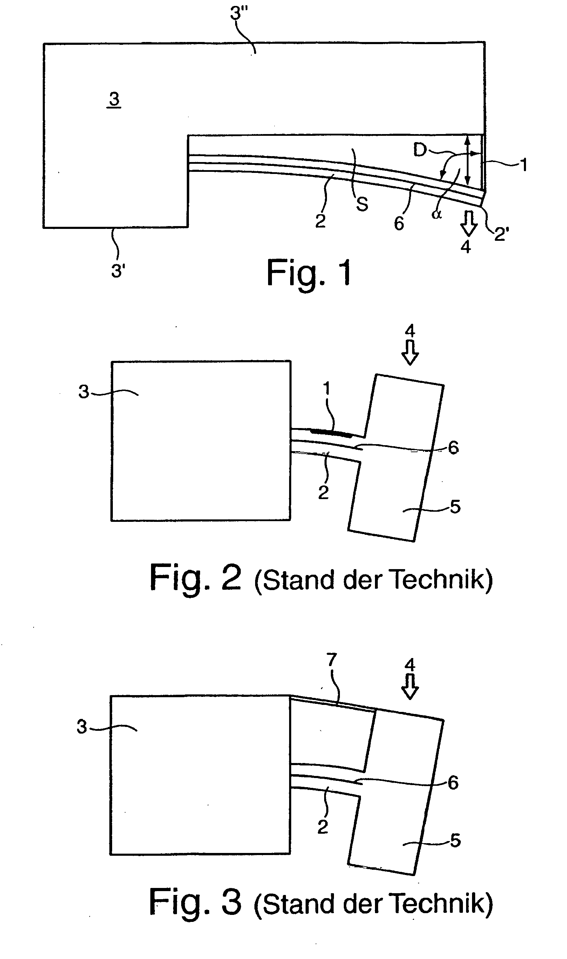

Es existieren nach dem Stand der Technik wenigstens zwei geometrische Grundprinzipien für die Ausbildung des Fachwerks eines monolithischen, mit einem piezoresistiven Element aus Halbleitermaterial gefertigten Wandlers. Das erste Prinzip wird unter Bezugnahme auf das in Figur 2 illustrierte Grundschema für einen Aufbau eines piezoresistiven Wandlers kurz erläutert. Das piezoresistive Element 1 ist in das Biegeelement 2 eingebettet, welches an dem Träger 3 fixiert ist. Die Messgröße wirkt in Richtung des Pfeils 4. Zur Orientierung ist die neutrale Faser 6 des Biegeelements 2 eingezeichnet, die den Ort von sich gegenseitig aufhebenden Druck- und Zugspannungen innerhalb des Biegelementes während der Verformung angibt. Ein Fachmann erkennt, dass die Verwendung der Zusatzmasse 5 optional ist und das geometrische Prinzip nicht verändert.

Bei dem in Figur 3 illustrierten zweiten Prinzip ist das piezoresistive Element 7 als freitragendes Element zwischen dem Träger 3 und der Masse 5 realisiert. Das Fachwerk ist im Übrigen identisch zu dem in Figur 2 ausgebildet. Durch die illustrierte Anbringung des piezoresistiven Elementes 7 kann es in einem größeren Abstand zur neutralen Faser 6 fixiert werden, so dass sich eine deutlich höhere Dehnung längs des piezoresistiven Elementes 7 bei gleicher Belastung durch die Messgröße 4 des Biegeelements 2 einstellt, als im Falle der Figur 2, wodurch eine höhere Sensitivität, bei gleicher mechanischer Eigenfrequenz, erreichbar ist.

Viele bekannte Fachwerke mit monolithischen, mit einem piezoresistiven Element aus Halbleitermaterial ausgestatteten piezoresistiven Wandlern lassen sich auf die vorstehend beiden beschriebenen Grundschemata gemäß der Figuren 2 und 3 zurückführen. Das erste geometrische Prinzip ist aufgrund seiner einfachen technischen Realisierbarkeit Industriestandard, zu dem unzählige Ausführungsformen existieren. Das zweite geometrische Prinzip ist aufgrund des freitragenden piezoresistiven Elementes ungleich aufwendiger zu fertigen und deswegen weniger weit verbreitet.

Den nachfolgenden Druckschriften ist jeweils ein piezoresistiver Beschleunigungssensor zu entnehmen, der auf dem vorstehend erläuterten zweiten Prinzip beruht: US 5539236, US 4605919, US 4689600, US 2006130596, WO 9215018. In den bekannten Fällen sind zwei relativ zueinander, über einen gedünnt ausgebildeten Verbindungsbereich beweglich angeordnete Elemente einstückig miteinander verbunden, zwischen denen eine Art Grabenstruktur vorgesehen ist, die von einem aus piezoresistiven Material bestehenden Dehnkörper überbrückt wird. Der piezoresistive Dehnkörper überspannt in den Fällen der US 4605919, US 4689600, WO 92/15018, US 2006/0117871 weitgehend freitragend die Grabenstruktur, ist jedoch in allen bekannten Fällen parallel zur neutralen Faser des Biegeelementes orientiert, das den jeweils zwischen beiden beweglich Elementen ausgedünnten Verbindungsbereich darstellt.

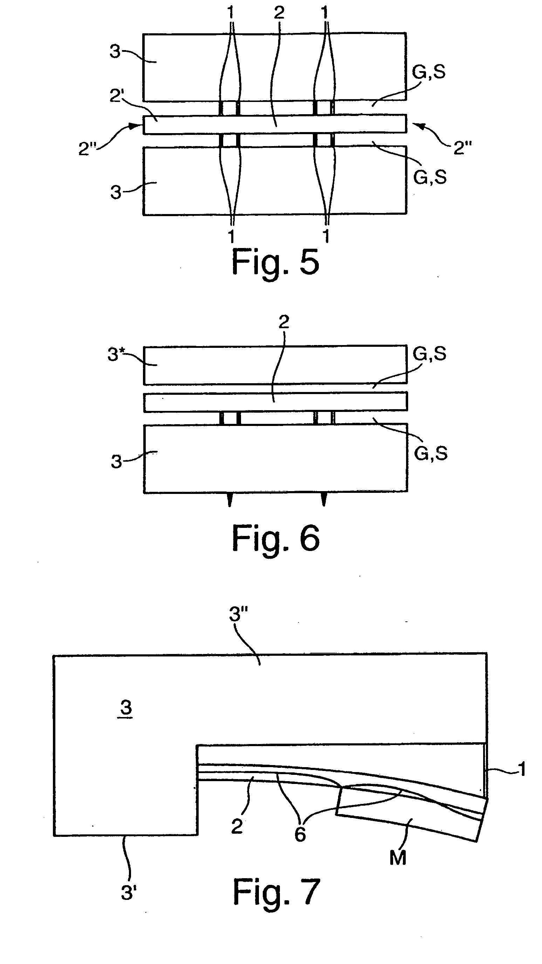

Die Druckschrift US 4,879,914 beschreibt einen hochpräzisen Druck-Zug-Kraftmessfühler, der über einen einheitlichen Körper verfügt, der Befestigungsbereiche sowie Kraftmesselemente aufweist. Der einheitliche Druck-Zug-Kraftmessfühler ist gemäß einer Ausführungsvariante gemäß Fig. 7 zur Anbringung zwischen einer ersten und zweiten Struktur ausgebildet. Die beiden Kraft messenden Elemente innerhalb des einheitlichen Körpers sind parallel zueinander angeordnet und mit ihren Enden in kinematisch in entgegengesetzter Weise über die Befestigungsbereiche jeweils an einer ersten und zweiten Tragstruktur verbunden, so dass bei einem einheitlichen Krafteintrag auf den einheitlichen Körper das eine Kraft messende Element beispielsweise gestaucht, wohingegen das andere Kraft messende Element gedehnt wird. Eben diese entgegengesetzt auf die jeweiligen Kraft messenden Elemente gerichtete Kraftwirkung ermöglicht eine Reduzierung von Messfehlern, im Sinne einer Fehlerkompensation, die bspw. durch thermisch induzierte Spannungen zwischen der Tragstruktur und dem einheitlichen Druck-Zug-Kraftmessfühler herrühren können.

Die Druckschrift EP 2 008 965 A2 beschreibt ein Resonatorsystem mit einem einseitig eingespannten Federbalken, siehe hierzu das Ausführungsbeispiel in der dortigen Fig. 3b, dessen freies Federbalkenende stirnseitig mit einer frei schwingend gelagerten Masse verbunden ist. Zur resonanten Schwingungsanregung ist eine Anregungselektrode vorgesehen, die beabstandet längs zum Federbalkenabschnitt angebracht ist. Zur Erfassung der Schwingungsauslenkung ist der Federbalken einstückig mit einem piezoresistiven Dehnkörper, der senkrecht zur neutralen Faser des Biegeelementes orientiert ist, verbunden. Das bekannte Resonatorsystem ist in einem Ausführungsbeispiel Erfassung von Beschleunigungen einsetzbar, die von seismischen Massen herrühren.

Die Druckschrift US 4,809,552 beschreibt einen Vielfachrichtungskraftsensor, der ein T-förmig ausgebildetes Biegeelement besitzt, dessen beide sich gegenüberliegenden Enden des jeweils oberen T-Abschnittes einstückig mit einem ansonsten U-förmig ausgebildeten Trägerelement verbunden sind.

### Darstellung der Erfindung

Der Erfindung liegt die Aufgabe zugrunde einen Beschleunigungssensor mit einem piezoresistiven Wandler mit einem Fachwerk, das ein Trägerelement aufweist, an dem ein Biegeelement angebracht ist, das relativ zum Trägerelement bei einer Krafteinwirkung eine Verformung erfährt, da es eine neutrale Faser besitzt, deren Länge bei der Verformung unveränderlich ist, und an dem ein piezoresistives Material aufweisender Dehnkörper angebracht ist, der die Verformung des Biegeelementes in eine elektrisch detektierbare Widerstandsänderung umwandelt, derart weiterzubilden, dass der Wandler über eine möglichst hohe Sensitivität verfügt.

Die Lösung der der Erfindung zugrunde liegenden Aufgabe ist im Anspruch 1 und 7 angegeben. Den Erfindungsgedanken in vorteilhafter Weise weiterbildende Merkmale sind Gegenstand der abhängigen Ansprüche sowie der weiteren Beschreibung insbesondere unter Bezugnahme auf die Ausführungsbeispiele zu entnehmen.

Bereits der nach dem vorstehend erläuterten zweiten Prinzip aufgebaute piezoresistive Wandler gemäß Figur 3 ist unter Maßgabe einer Verbesserung der Sensitivität, d.h. messtechnischen Nachweisbarkeit einer durch Beschleunigungskräfte verursachte Deformationen längs des Biegeelementes ausgestaltet worden. Es ist bekannt, dass sich die elektrische Widerstandsänderung in einem piezoresistiven Element monoton zur Dehnung des piezoresistiven Elementes verhält, d.h. bei einer Dehnung des piezoresistiven Elementes in eine Richtung verändert sich dessen elektrischer Widerstand ebenfalls nur in eine Richtung. Die Sensitivität des piezoresistiven Wandlers wird also maximal, wenn die Dehnung des piezoresistiven Elementes bei gegebener Messgröße maximal ist. Aus diesem Grunde wurde im vorstehenden bekannten Fall das als Dehnkörper dienende piezoresistive Element an einer, bezogen auf die potentielle Dehnung, exponierten Stelle der Geometrie des Fachwerks angebracht, d.h. in einem möglichst großen Abstand zum Biegeelement. Dies jedoch erfordert wenigstens eine zusätzliche am Biegelement angebrachte Zusatzkomponenten bzw. -masse zur Befestigung des Dehnkörpers.

Das lösungsgemäße piezoresistive Wandlerkonzept macht sich grundsätzlich den vorstehenden bekannten Gedanken zu nutze, verzichtet jedoch auf die Notwendigkeit des Vorsehens einer mit dem Biegeelement verbundenen Zusatzkomponente bzw. -masse. Lösungsgemäß zeichnet sich ein Beschleunigungssensor mit einem piezoresistiven Wandler gemäß den Merkmalen des Oberbegriffs des Anspruches 1 dadurch aus, dass das Trägerelement, das Biegeelement und der Dehnkörper monolithisch verbunden sind, dass das Biegeelement plättchenförmig ausgebildet ist und von vier Seitenkanten begrenzt ist, von denen eine Seitenkante unmittelbar mit dem Trägerelement dauerhaft gefügt ist und wenigtsens eine andere Seitenkante frei endet, und dass der wenigstens eine Dehnkörper an oder im Bereich der frei endenden Seitenkante zwischen dem Trägerelement und dem Biegeelement angeordnet ist. Alternativ ist das plättchenförmige Biegeelement von einem Umfangsrand begrenzt ist, über dessen gesamten Umfangsrand das Biegeelement mit dem Trägerelement dauerhaft gefügt ist und das Trägerelement zumindest bereichsweise membranartig überspannt. In diesem Fall ist der wenigstens eine Dehnkörper zwischen dem Trägerelement und dem das Trägerelement membranartig überspannenden Biegeelement angeordnet. Bei einem lösungsgemäßen Beschleunigungssensor umfasst das Trägerelement samt Biegeelement und Dehnkörper ein Volumen von 1 bis 10 mm³, insbesondere 1 bis 3 mm³ und ist in der Lage Beschleunigungen von 1000 g und mehr zu erfassen.

Der Dehnkörper erstreckt sich nicht längs, d.h. parallel zur neutralen Faser des Biegeelementes, sondern ist zur neutralen Faser des Biegeelementes freitragend senkrecht dazu angeordnet. Dies jedoch erfordert eine spezielle Ausbildung des Fachwerkes, d.h. des Trägerelementes mit dem damit verbundenen Biegeelementes, die gemeinsam einen Spalt miteinander einschließen, der durch wenigstens einen Dehnkörper überbrückt wird. Wirkt eine äußere, das Biegeelement auslenkende Kraft auf das Fachwerk ein, so erfährt der Dehnkörper keine wesentliche Biegung quer zu seiner Dehnkörperlängserstreckung, sondern wird vielmehr längs seiner Dehnkörperlängserstreckung gestreckt oder gestaucht, wodurch es zu einer maximalen elektrisch detektierbaren Widerstandsänderung kommt. Die Dehnung bzw. Verformung des Dehnkörpers ist bei dem lösungsgemäßen Wandlerkonzept bei ansonsten gleicher externer Krafteinwirkung größer als im Falle eines längs zum Biegeelement orientierten Dehnkörpers, zumal die Auslenkung des Biegeelementes unmittelbar in eine Dehnung des Dehnkörpers hauptsächlich längs seiner Dehnkörperlängserstreckung umgesetzt wird, die mit einer maximal erreichbaren elektrisch detektierbaren Widerstandsänderung verbunden ist.

Der vollständig aus einem Wandlermaterial, bspw. piezoresisitivem Material bestehende Dehnkörper sorgt insbesondere dann für eine größtmögliche Sensitivität, wenn der Dehnkörper sowohl unter Dehnung wie auch Stauchung eine maximale Längenänderung erfährt. Das bedeutet, dass er mechanisch so ausgeführt werden muss, dass er insbesondere unter einer stauchenden Belastung keine ausweichenden Verformung, beispielsweise seitliches Verbiegen, Ausbeulen oder "Wegknicken", quer zur Belastungsrichtung erfährt. Eine mögliche ausweichende Verformung kann minimiert werden, indem der Dehnkörper mechanisch besonders stabil ausgeführt wird, beispielsweise mit einem kleinen Länge zu Querschnitt Verhältnis und/oder der Verwendung eines besonders stabilen, monolithisch integrierbaren Materials, wie beispielsweise Silizium oder andere kristalline Materialien.

Nur aus Gründen der Vollständigkeit sei in Zusammenhang mit dem Begriff der "neutralen Faser" darauf hingewiesen, dass die neutrale Faser nicht notwendigerweise innerhalb des Materials bzw. Werkstoffes, aus dem das Biegelement besteht bzw. gefertigt ist, verlaufen muss. So sind Biegeelementkonstruktionen denkbar, bei denen die neutrale Faser auch außerhalb des eigentlichen Werkstoffes des Biegeelementes verläuft, in Form einer so genannten virtuellen neutralen Faser, bspw. bei einer aus wenigstens zwei parallel zueinander verlaufenden Streben bestehenden Biegeelementkonstruktion.

Zur weiteren Erläuterung des lösungsgemäß ausgebildeten piezoresistiven Wandlerprinzips wird auf die nachstehenden in den Figuren illustrierten Ausführungsbeispiele verwiesen, deren konkrete Ausführungsformen den allgemeinen erfinderischen Gedanken nicht beschränken sollen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Grundschema zur Erläuterung eines lösungsgemäßen piezoresistiven Wandlers
- Fig. 2: Wandlerprinzipdarstellung zum Stand der Technik,
- Fig. 3: Wandlerprinzipdarstellung zum Stand der Technik,
- Fig. 4 a, b: piezoresistiver Wandler mit einem dreiseitig mit dem Trägerelement verbundenen Biegeelement,
- Figur 5: piezorezisitiver Wandler mit einem einseitig mit dem Trägerelement verbundenen Biegeelement,
- Figur 6: piezorezisitiver Wandler mit einseitig mit dem Trägerelement verbundenen Biegeelement und
- Figur 7: Modifikation des Wandlers gemäß Figur 6.

### Wege zur Ausführung der Erfindung, gewerbliche Verwendbarkeit

Figur 1 stellt einen Längsschnitt durch das Fachwerk eines piezoresistiven Wandlers dar, anhand dessen das lösungsgemäße Wandlerprinzip erläutert werden soll. Das Fachwerk bzw. der piezoresistive Wandler verfügt über ein stabiles Trägerelement 3, das im Längsschnitt "L"-förmig ausgebildet ist mit einem kurzem und einem langen "L"-Schenkel 3', 3". Im Bereich des kurzen "L"-Schenkel 3' ist das Biegeelement 2 einseitig monolithisch mit dem Trägerelement 1 verbunden und in Art eines einseitig fest eingespannten Federbalkens ausgebildet. Zudem schließt das Biegeelement 2 mit dem längeren "L"-Schenkel 1" der Trägerstruktur 3 einen Spalt S ein. Im Bereich der stirnseitig frei endenden Biegeelementkante 2' ist zwischen der Trägerstruktur 3 und der Biegeelementkante 2' ein aus piezoresistivem Material bestehender Dehnkörper 1 vorgesehen, der das Trägerelement 3 lokal mit dem Biegeelement 2 verbindet. Der Dehnkörper 1 kann platten- oder stiftförmig ausgebildet sein und weist eine Dehnkörperlängserstreckung D auf, die vorzugsweise orthogonal zur neutralen Faser 6 des Biegeelementes 12 orientiert ist. Dies gilt insbesondere im nicht ausgelenkten Fall des Biegeelementes 2. Unabhängig von der gewählten Formgebung des Dehnkörpers gilt es darauf zu achten, dass dieser quer zu seiner Dehnkörperlängserstreckung formstabil ausgebildet ist, um lastbedingte Querverformungen ausschließen zu können. Dies ist insbesondere auch dann zu beachten, wenn der Dehnkörper vollständig aus einem piezoresistiven Material besteht.

Unterliegt der piezoresistive Wandler äußeren Beschleunigungskräften, so erfährt das Biegeelement 2 aufgrund der diesem eigenen Flächenelastizität eine Verformung in der in Figur 1 dargestellten Weise, bei der angenommen wird, dass das Biegeelement 2 durch eine zu erfassende Messgröße 4 relativ zur starr ausgebildeten Trägerstruktur 3 ausgelenkt wird. Durch die Auslenkung des Biegeelementes 2 erfährt der piezoresistive Dehnkörper 1 eine Dehnung in Dehnkörperlängserstreckung D, durch die eine maximale detektierbare elektrische Widerstandsänderung innerhalb des Dehnkörpers hervorgerufen wird.

Der piezoresistive Dehnkörper 1 ist lösungsgemäß freitragend in dem Sinne ausgebildet, dass keine weiteren Stützkörper oder Stützschichten vorgesehen sind, die zur Verbindung von Trägerstruktur 3 und Biegeelement 2 über den vorzugsweise ausschließlich oder überwiegend aus piezoresistivem Material bestehenden Dehnkörper 1 dienen. Dies schließt jedoch nicht explizit aus, dass zusätzliche Elemente, die eine andere Funktion als die mechanische Stützung des piezoresistiven Dehnkörpers 1 haben, sich an der im wesentlichen gleichen Stelle wie das piezoresistive Element befinden können. Dies können beispielsweise Hilfselemente sein, die die mechanischen Eigenschaften des Fachwerks beeinflussen. Hierzu wird nochmals Bezug genommen in Verbindung mit dem in Figur 5 gezeigten Ausführungsbeispiel.

Auch ist durchaus es vorstellbar, dass die Dehnkörperlängserstreckung D des Dehnkörpers 1 und die neutrale Faser 6 des Biegeelementes 2 in einem nicht ausgelenkten bzw. nicht verformten Zustand des Biegeelementes 12 einen Winkel α einschließen, der zwischen 45° und 135° liegt, vorzugsweise jedoch 90° beträgt.

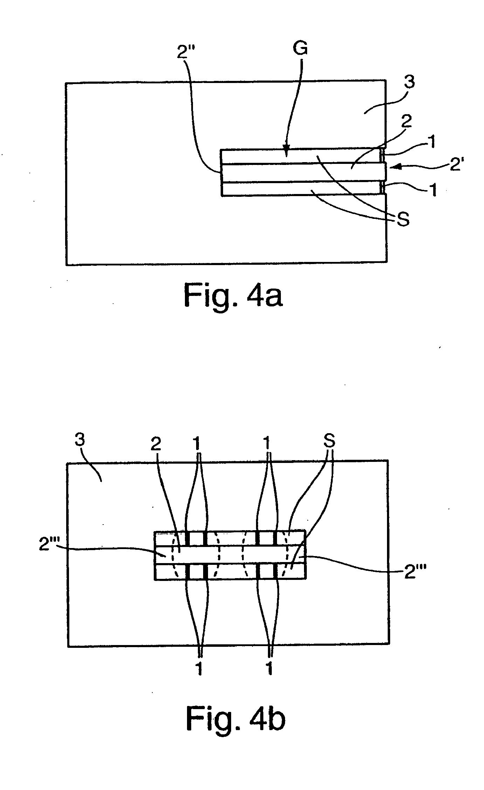

In den Figuren 4 a, b ist eine konkrete Ausführungsform für einen lösungsgemäß ausgebildeten piezoresistiven Wandler dargestellt. Figur 4a zeigt einen Längsschnitt durch die Wandleranordnung, Figur 4b eine Vorderansicht. Es sei angenommen, dass die Trägerstruktur 3 quader- oder würfelförmig ausgebildet ist und an einer Oberfläche, die in Figur 2b in der Draufsicht dargestellt ist, eine rechteckförmig und sacklochartig ausgebildete Grabenstruktur G aufweist. Mittig zur Grabenstruktur G ist ein plättchenförmig ausgebildetes Biegeelement 2 eingebracht, dessen Hinterkante 2" sowie Seitenkanten 2"' monolithisch mit der Trägerstruktur 3, d.h. mit den Innenwänden der Grabenstruktur G verbunden sind. Das plättchenförmige Biegeelement 2 ist innerhalb der Grabenstruktur G mittig angeordnet und schließt mit seiner Biegeelementoberseite und Biegeelementunterseite jeweils einen Spalt S mit dem Trägerelement 3 ein. Das Biegeelement 2 mündet zudem freitragend offen an seiner vorderen Stirnseite 2', die im Ausführungsbeispiel gemäß der Figuren 4a und b bündig mit der in Figur 4b in der Draufsicht dargestellten Oberfläche der Trägerstruktur 3 abschließt.

Im Bereich der frei endenden stirnseitigen Vorderkante 2' des Biegeelementes 2 sind aus piezoresistivem Material gefertigte Dehnkörper 1 vorgesehen, die vorzugsweise stiftförmig ausgebildet und jeweils die Trägerstruktur 3 lokal mit dem Biegeelement 2, an dessen Vorderkante 2' verbinden. Die stiftförmig ausgebildeten piezoresistiven Dehnkörper 1 sind jeweils senkrecht zur oberen und unteren Oberfläche des Biegeelementes 2, d.h. senkrecht zur neutralen Faser 6 (nicht eingezeichnet) des Biegeelementes 2 angeordnet und überspannen jeweils die Spalte S. Die Anzahl der piezoresistiven Dehnkörper 1 ist prinzipiell beliebig wählbar, besonders bevorzugt ist es, eine Anordnung von piezoresistiven Dehnkörper 1 in einer Vierergruppenaufteilung zu wählen, bei der eine Vierergruppe jeweils zwei Dehnkörper enthält, die die Oberseite des Biegeelementes 2 mit der Trägerstruktur 3 verbinden sowie zwei Dehnkörper1 , die die Unterseite des Biegeelementes 2 mit der Trägerstruktur 3 verbinden, wie dies aus der Draufsichtdarstellung gemäß Figur 4b (siehe strichlierte Ellipsen) zu entnehmen ist. Sämtliche zu einer Vierergruppe zugehörigen piezoresistiven Dehnkörper 1 sind zu einer Wheatstoneschen Brückenschaltung elektrisch verbunden, mit der kleinste Ohm'sche Widerstandsänderungen erfassbar sind. Der in den Figuren 4a und b illustrierte piezoresitive Wandler ist zur Erfassung von Beschleunigungskräften ausgelegt, die vorzugsweise orthogonal zur Flächenerstreckung des plättchenförmig ausgebildeten Biegeelementes 2 orientiert sind, siehe die in Richtung des Pfeils 4 wirkende Messgröße.

Ein weiteres Ausführungsbeispiel für einen piezoresistiven Wandler ist in Figur 5 dargestellt, in dem vergleichbar zur Draufsichtdarstellung gemäß Figur 4b ebenfalls eine Draufsichtansicht auf eine Trägerstruktur 3 gezeigt ist, in der in ähnlicher Weise eine Grabenstruktur G eingebracht ist. Das in dieser Ausführungsform illustrierte Biegeelement 2 ist plättchenförmig ausgebildet, deren frei endende vordere Stirnseitenkante 2' ersichtlich ist. Im Weiteren sei angenommen, dass die der vorderen Stirnseitenkante 2' rückwärtig gegenüberliegende Seitenkante monolithisch mit der Trägerstruktur 3 verbunden ist, wohingegen die beiden Seitenkanten 2" des Biegeelementes 2 gleichsam der vorderen Stirnseitenkante 2' keine Verbindung zum Trägerelement 3 besitzen. Das Biegeelement 2 ist somit als einseitig eingespannter Federbalken aufzufassen, wodurch das Biegeelement 2 über eine weitaus höhere Flächenelastizität verfügt als im Falle des vorstehenden Ausführungsbeispiel, bei dem das Biegelement dreiseitig monolithisch mit dem Trägerelement verbunden ist. Die in Figur 5 illustrierte Ausführungsform verfügt somit über eine größere Sensibilität in Bezug auf die Detektion von Beschleunigungskräften bei einer geringeren mechanischen Eigenfrequenz, als die in Figur 4 a, 4b dargestellte Ausführungsform.

In gleicher Weise überspannen piezoresistive Dehnkörper 1 die Spalte S der Grabenstruktur G sowohl zwischen der oberen Oberfläche des Biegeelementes 2 mit dem Trägerelement 3 als auch zwischen der unteren Oberfläche des Biegeelementes 2 mit dem Trägerelement 3. Auf eine Schnittansicht der in Figur 5 illustrierten Ausführungsform wird verzichtet, zumal sie identisch ist mit der Schnittansicht gemäß Figur 4a.

Eine weitere Ausführungsform ist in Figur 6 angegeben, die sich von der in Figur 5 illustrierten Ausführungsform dadurch unterscheidet, dass lediglich nur der untere Spalt S der Grabenstruktur G vom piezoresistiven Dehnkörper 1 überspannt wird. Der obere Teil 3* des Trägerelementes 3 ist lediglich optional und kann ohne weiteres entfallen.

In Figur 7 ist eine weitere Modifikation des vorstehend in Figur 6 illustrierten Ausführungsbeispiels in Längsschnittdarstellung gezeigt, bei der im stirnseitigen Bereich des Biegeelementes 2 eine zusätzliche Masse M angebracht ist, durch die die mechanische Eigenfrequenz des piezoresistiven Wandlers verringert und die Sensibilität in Bezug auf die Detektion von Beschleunigungskräften erhöht werden. Zwar vermag die vorgesehene Zusatzmasse M, die ebenfalls längs des Biegeelementes 2 eingezeichnete neutrale Faser 6 zu deformieren, gleichwohl erstreckt sich auch bei diesem Ausführungsbeispiel der stiftartig ausgebildete piezoresistive Dehnkörper 1 weitgehend senkrecht zum Verlauf der neutralen Faser 6, so dass dieser bei entsprechender Auslenkung des Biegeelementes 2 vorwiegend eine Dehnung in Dehnkörperlängserstreckung erfährt, wodurch eine maximal detektierbare Widerstandsänderung innerhalb des Dehnkörpers auftritt und als Messgröße zu erfassen ist.

Neben den vorstehend beschriebenen, konkreten Ausführungsbeispielen für eine Realisierung des lösungsgemäßen piezoresistiven Wandlerkonzeptes ist eine Vielzahl weiterer Abwandlungsformen denkbar und realisierbar, ohne dass dabei das geometrische Prinzip oder die Verwendung von freitragenden, piezoresistiven Dehnkörpern aus Halbleitermaterial verändert werden müssen. Zu diesen Abwandlungen gehören beispielsweise das Hinzufügen einer Zusatzmasse beliebiger Verteilung, wie erläutert, oder eine Veränderung der Form des Trägerelementes oder des Biegeelementes oder der Form, Anzahl und Ort oder räumliche Orientierung der piezoresistiven Dehnkörper. Beispielsweise sei in diesem Zusammenhang erwähnt, dass ein plättchenförmig ausgebildetes Biegeelement längs zwei sich gegenüber liegenden Seitenkanten monolithisch mit dem Trägerelement verbunden sein kann, wohingegen die übrigen zwei gegenüberliegenden Seitenkanten des ansonsten rechteckförmig ausgebildeten plättchenförmigen Biegeelementes frei enden. Auch bei einer derartigen Ausgestaltungsform ist es möglich, piezoresistive Dehnkörper an den beiden sich gegenüberliegenden frei endenden Stirnseiten des Biegeelementes in der lösungsgemäßen Form, nämlich mit senkrechter Dehnkörperlängserstreckung zur neutralen Faser des plättchenförmigen Biegelementes vorzusehen.

Ein alternativer, lösungsgemäßer Beschleunigungssensor sieht ein plättchenförmiges Biegeelement vor, das von einem kreisrunden, elliptischen, n-eckigen oder einer Mischform aus den vorstehenden Geometrien aufweisenden Umfangsrand begrenzt ist. Das Biegeelement ist dabei über seinen gesamten Umfangsrand mit dem Trägerelement dauerhaft verbunden und überspannt das Trägerelement zumindest bereichsweise. Wenigstens ein Dehnkörper ist zwischen dem Trägerelement und dem das Trägerelement membranartig überspannenden Biegeelement angeordnet.

Die lösungsgemäß ausgebildeten Beschleunigungssensoren mit einem piezoresistiven Wandler eignen sich zur Erfassung von Beschleunigungen bzw. Beschleunigungskräften mit einer besonders ausgeprägt hohen Sensitivität. Hierzu bedient man sich in vorteilhafter Weise der Messsignalerfassung mit Hilfe einer Wheatstone'schen Messbrücke, wie dies unter Bezugnahme auf das Ausführungsbeispiel gemäß Figur 4b oder 5 gezeigt ist. Die Brückenschaltung besteht aus zwei Paar Widerständen bzw. in Widerstandskaskaden, die bei der Verbiegung bzw. Deformation des Biegeelementes gleichzeitig jeweils eine entgegengesetzt gleich große Widerstandsänderung erfahren, wodurch eine besonders präzise Messung der Ohm'schen Widerstandsänderung möglich wird.

Die Materialwahl sowie auch die Abmessung und Formgebung des Fachwerkes, insbesondere des Trägerelementes werden vorzugsweise so gewählt, dass der piezoresistive Wandler über eine hohe mechanische Eigenfrequenz verfügt, die durch das Biegeelement bestimmt wird. Bevorzugte Abmessungen für Realisierungen lösungsgemäßer piezoresistiver Wandler betragen einige 10 bis einige 100µm. Beispielsweise beträgt die Breite des Biegeelementes 2 in dem Ausführungsbeispiel gemäß Figur 4b eine Biegeelementdicke von 30 µm, eine Stirnseitenkantenlänge von 400 µm sowie eine sich in die Grabenstruktur tiefer erstreckende Biegeelementlänge von 200µm. Das Biegeelement 2 schließt hierbei mit der Trägerstruktur 3 jeweils eine Spaltbreite S von 20 µm ein. Die stab- bzw. stiftförmigen piezoresistiven Dehnkörper gemäß Fig. 4, 5, 6, 7 weisen typischerweise einen Durchmesser von 1 bis 2 µm auf und verfügen über eine Dehnkörperlängserstreckung von wenigstens der Spaltbreite bspw. 20µm und mehr.

Der piezoelektrische Wandler dient als Hoch-g-Beschleunigungssensor, zur Erfassung von Beschleunigungen von 1000g und mehr, vorzugsweise von 100000g und mehr. Hierbei sind die Eigenschaften bezüglich der Sensitivität und mechanischen Eigenfrequenz von entscheidender Wichtigkeit. Die mechanische Steifigkeit und somit die mechanische Eigenfrequenz des Sensors muss so groß gewählt sein, dass auch schnell veränderliche und sehr starke Beschleunigungspulse gemessen werden können. Um eine Eigenfrequenz im Bereich von 1 bis 3 MHz zu erreichen und somit eine Zeitauflösung der Messung im Mikrosekundenbereich zu erhalten, ist es notwendig den Sensor im Mikromaßstab zu fertigen. Die äußeren Abmessungen des Sensors liegen im Bereich 1 x 2 x1 mm (L x B x H) und ergeben bei der Wahl von Silizium als Material ein Gewicht von etwa 5 mg. Um bei geforderter Eigenfrequenz eine größtmögliche Sensitivität zu erreichen, müssen beim Design der konkreten Realisierungen die ausführlich beschriebenen Aspekte der Erfindung, insbesondere die geometrische Anordnung der Elemente und die Materialwahl, berücksichtigt werden.

Gilt es einen derartigen Sensor als Hoch-g-Beschleunigungssensor einzusetzen, so wird dieser, d.h. das den wenigstens einen Dehnkörper zumindest teilweise umfassende Trägerelement unmittelbar auf einem Messobjekt gefügt, bspw. im Wege eine Klebung oder anderen festen Fügung. Bei der Messwertaufnahme erfährt somit das Trägerelement die vollständig zu erfassende Beschleunigungswirkung, die im Dehnkörper die entsprechende Deformation hervorruft.

Als Rohmaterial für die Herstellung eines lösungsgemäß ausgebildeten piezoresistiven Wandlers eignet sich besonders bevorzugt Silizium, das mit Hilfe an sich bekannter Fertigungs- und Bearbeitungsverfahren aus der Halbleitertechnologie bekannt sind, in geeigneter Form bearbeitet wird.

### Bezugszeichenliste

- 1: Dehnkörper
- 2: Biegeelement
- 2': Vorderkante des Biegelementes
- 2": Hinterkante des Biegelementes
- 2'": Seitenkanten des Biegelementes
- 3: Trägerelement
- 3': Kurzer L-Schenkel des Trägerelementes
- 3": Langer L-Schenkel des Trägerelementes
- 4: äußere Krafteinwirkung, Beschleunigungskraft
- 5: Zusatzmasse
- 6: neutrale Faser
- D: Dehnkörperlängserstreckung
- M: Zusatzmasse
- G: Grabenstruktur
- S: Spalt

## Patentansprüche

1. Beschleunigungssensor mit einem piezoresistiven Wandler mit einem Fachwerk, das ein Trägerelement (3) aufweist, an dem ein Biegeelement (2) angebracht ist, das relativ zum Trägerelement (3) bei einer Krafteinwirkung eine Verformung erfährt, das eine neutrale Faser (6) besitzt, deren Länge bei der Verformung unveränderlich ist, und an dem ein piezoresistives Material aufweisender Dehnkörper (1) angebracht ist, der die Verformung des Biegelementes (2) in eine elektrisch detektierbare Widerstandsänderung umwandelt, wobei das Trägerelement (3) und das Biegeelement (2) zumindest bereichsweise einen Spalt (S) zumindest zweiseitig begrenzen, und wenigstens ein Dehnkörper (1) vorgesehen ist, der das Trägerelement (3) und das Biegeelement (2) im Bereich des Spaltes (S) brückenartig freitragend lokal verbindet, und der wenigstens eine Dehnkörper (1) über eine Dehnkörperlängserstreckung (D) verfügt, die die neutrale Faser (6) unter einem Winkel α schneidet, mit 35° ≤ α ≤ 145°, insbesondere α = 90°,
**dadurch gekennzeichnet, dass** das Trägerelement (3), das Biegeelement (2) und der Dehnkörper (1) monolithisch verbunden sind,
dass das Biegeelement (2) plättchenförmig ausgebildet und von vier Seitenkanten begrenzt ist, von denen eine Seitenkante unmittelbar mit dem Trägerelement (3) dauerhaft gefügt ist und wenigstens eine andere Seitenkante frei endet, und
dass der wenigstens eine Dehnkörper (1) an oder im Bereich der frei endenden Seitenkante zwischen dem Trägerelement (3) und dem Biegeelement (2) angeordnet ist, und dass das Trägerelement (3) samt Biegeelement (2) und Dehnkörper (1) ein Volumen von 1 bis 10 mm³, insbesondere 1 bis 3 mm³ umfasst und Beschleunigungen von 1000 g und mehr zu erfassen in der Lage ist.

2. Beschleunigungssensor nach Anspruch 1,
**dadurch gekennzeichnet, dass** der Dehnkörper (1) ausschließlich aus piezoresistivem Material besteht und einerseits mit dem Trägerelement (3) und andererseits mit dem Biegelement (2) dauerhaft gefügt ist.

3. Beschleunigungssensor nach Anspruch 1 oder 2,
**dadurch gekennzeichnet, dass** das Biegeelement (2) über zwei sich gegenüberliegenden Seitenkanten mit dem Trägerelement (3) dauerhaft gefügt ist und die anderen beiden Seitenkanten frei enden, und
dass der wenigstens eine Dehnkörper (1) an oder im Bereich der wenigstens einen frei endenden Seitenkante zwischen dem Trägerelement (3) und dem Biegeelement (2) angeordnet ist.

4. Beschleunigungssensor nach Anspruch 1 oder 2,
**dadurch gekennzeichnet, dass** das Biegeelement (2) über drei Seitenkanten mit dem Trägerelement (3) dauerhaft gefügt ist und die andere Seitenkante frei endet, und
dass der wenigstens eine Dehnkörper (1) an oder im Bereich der einen frei endenden Seitenkante zwischen dem Trägerelement (3) und dem Biegeelement (2) angeordnet ist.

5. Beschleunigungssensor nach Anspruch 1 oder 2,
**dadurch gekennzeichnet, dass** das Biegeelement (2) eine Ober- und Unterseite aufweist,
dass das Trägerelement (3) das Biegeelement (2) zumindest bereichsweise derart umfasst, dass das Biegeelement (2) mit dem Trägerelement (3) zwei Spalte (S) begrenzt, von denen ein Spalt (S) zwischen der Oberseite des Biegeelementes (2) und dem Trägerelement (3) und der andere Spalt (S) zwischen der Unterseite des Biegeelementes (2) und dem Trägerelement (3) eingeschlossen ist,
dass das Biegeelement (2) wenigstens zwei sich gegenüberliegende Seitenkanten aufweist, von denen eine mit dem Trägerelement (3) dauerhaft gefügt ist und die andere Seitenkante frei endet, oder
dass das Biegeelement (2) über zwei sich gegenüberliegenden Seitenkanten mit dem Trägerelement (3) dauerhaft gefügt ist und die anderen beiden Seitenkanten frei enden,und
dass der wenigstens eine Dehnkörper (1) an oder im Bereich der wenigstens einen frei endenden Seitenkante zwischen dem Trägerelement (3) und dem Biegeelement (2) angeordnet ist.

6. Beschleunigungssensor nach Anspruch 5,
**dadurch gekennzeichnet, dass** wenigstens zwei Dehnkörper (1) lokal zwischen der Oberseite des Biegeelementes (2) und dem Trägerelement (3) vorgesehen sind, dass wenigstens zwei Dehnkörper (1) zwischen der Unterseite des Biegeelementes (2) und dem Trägerelement (3) vorgesehen sind, und dass die wenigstens vier Dehnkörper (1) unter Ausbildung einer Wheatstoneschen Messbrücke miteinander verschaltet sind.

7. Beschleunigungssensor nach dem Oberbegriff des Anspruches 1,
**dadurch gekennzeichnet, dass** das Trägerelement (3), das Biegeelement (2) und der Dehnkörper (1) monolithisch verbunden sind,
dass das Biegeelement (2) plättchenförmig ausgebildet und von einem Umfangsrand begrenzt ist,
dass das Biegeelement (2) über den gesamten Umfangsrand mit dem Trägerelement (3) dauerhaft gefügt ist und das Trägerelement (3) zumindest bereichsweise membranartig überspannt, und
dass der wenigstens eine Dehnkörper (1) zwischen dem Trägerelement (3) und dem das Trägerelement (3) membranartig überspannenden Biegeelement (2) angeordnet ist, und dass das Trägerelement (3) samt Biegeelement (2) und Dehnkörper (1) ein Volumen von 1 bis 10 mm³, insbesondere 1 bis 3 mm³ umfasst und Beschleunigungen von 1000 g und mehr zu erfassen in der Lage ist.

8. Beschleunigungssensor nach Anspruch 7,
**dadurch gekennzeichnet, dass** der Dehnkörper (1) ausschließlich aus piezoresistivem Material besteht und einerseits mit dem Trägerelement (3) und andererseits mit dem Biegelement (2) dauerhaft gefügt ist.

9. Beschleunigungssensor nach einem der Ansprüche 1 bis 8,
**dadurch gekennzeichnet, dass** die Dehnkörperlängserstreckung (D) eine dem Dehnkörper (1) zuordenbare Raumrichtung definiert, längs der sich der Dehnkörper (1) verformt, wodurch die elektrisch detektierbare Widerstandsänderung hauptsächlich bestimmt ist.

10. Beschleunigungssensor nach einem der Ansprüche 1 bis 9,
**dadurch gekennzeichnet, dass** Trägerelement (3), das Biegeelement (2) und der Dehnkörper (1) aus Materialien hergestellt sind, die mit halbleitertechnologischen Methoden prozessierbar sind.

11. Beschleunigungssensor nach einem der Ansprüche 2 bis 6 sowie 8 bis 10,
**dadurch gekennzeichnet, dass** der aus einem piezoresistiven Material bestehende Dehnkörper (1) eine Größe und Form besitzt, durch die der Dehnkörper (1) dehn- und stauchbar in Dehnkörperlängserstreckung (D) sowie quer zur Dehnkörperlängserstreckung (D) formstabil ist.

12. Beschleunigungssensor nach einem der Ansprüche 1 bis 11,
**dadurch gekennzeichnet, dass** das Trägerelement (3) den Biege- (2) und Dehnkörper (1) zumindest teilweise umgibt und über wenigstens eine Aussenseite des Trägerelementes (3) mit einem einer Beschleunigungswirkung ausgesetzten Messobjekt fest verbindbar ist.

## Claims

1. Acceleration sensor having a piezoresistive transducer with a framework that has a support element (3) on which a bending element (2) is mounted, which experiences a deformation relative to the support element (3) upon the action of a force, said framework having a neutral axis (6), the length of which is constant under the deformation, and on which an expansion body (1) comprising a piezoresistive material is mounted, which converts the deformation of the bending element (2) into an electrically detectable resistance change, wherein the support element (3) and the bending element (2), at least in some areas, delimit a gap (S) on at least two sides, and at least one expansion body (1) is provided that locally connects the support element (3) and the bending element (2) in the area of the gap (S) in a bridge-type and cantilevered manner, and the at least one expansion body (1) has an expansion body longitudinal extent (D) which intersects the neutral axis (6) at an angle α, with 35° ≤ α ≤ 145°, in particular α = 90°,
**characterized in that** the support element (3), the bending element (2) and the expansion body (1) are monolithically connected,
that the bending element (2) is implemented as a small plate and is bounded by four side edges, one side edge of which is permanently joined to the support element (3) and at least one side edge is free at the end, and that at or in the region of the freely ending side edge the at least one expansion body (1) is arranged between the support element (3) and the bending element (2), and that the support element (3) together with the bending element (2) and expansion body (1) comprises a volume of 1 to 10 mm³, in particular 1 to 3 mm³ and is capable of detecting accelerations of 1000 g and above.

2. The acceleration sensor according to Claim 1,
**characterized in that** the expansion body (1) consists exclusively of piezoresistive material and is permanently joined both to the support element (3) and to the bending element (2).

3. The acceleration sensor according to Claim 1 or 2,
**characterized in that** the bending element (2) is permanently joined to the support element (3) via two opposite side edges and the other two side edges are free at the end, and
that the at least one expansion body (1) at or in the region of the at least one freely ending side edge is arranged between the support element (3) and the bending element (2).

4. The acceleration sensor according to Claim 1 or 2,
**characterized in that** the bending element (2) is permanently joined to the support element (3) via three side edges and the other side edge is free at the end, and
that the at least one expansion body (1) at or in the region of the at least one free ending side edge is arranged between the support element (3) and the bending element (2).

5. The acceleration sensor according to Claim 1 or 2, **characterized in that** the bending element (2) has a top and an underside,
that the support element (3) encloses the bending element (2) at least in some regions in such a manner that the bending element (2) with the support element (3) delimits two gaps (S), of which one gap (S) is enclosed between the top of the bending element (2) and the support element (3) and the other gap (S) is enclosed between the underside of the bending element (2) and the support element (3),
that the bending element (2) has at least two opposite side edges, one of which is permanently joined to the support element (3) and the other side edge is free at the end, or
that the bending element (2) is permanently joined to the operating support element (3) via two opposite side edges and the other two side edges are free at the ends, and
that the at least one expansion body (1) at or in the region of the at least one freely ending side edge is arranged between the support element (3) and the bending element (2).

6. The acceleration sensor according to Claim 5,
**characterized in that** at least two expansion bodies (1) are provided locally between the top of the bending element (2) and the support element (3), that at least two expansion bodies (1) are provided between the bottom of the bending element (2) and the support element (3), and that the at least four expansion bodies (1) are connected together, forming a Wheatstone bridge.

7. The acceleration sensor according to the preamble of Claim 1,
**characterized in that** the support element (3), the bending element (2) and the expansion body (1) are monolithically connected,
that the bending element (2) is implemented in the form of a small plate and bounded by a circumferential edge,
that the bending element (2) is permanently joined to the support element (3) over the entire circumferential edge and spans the support element (3) at least in some regions in the manner of a diaphragm, and
that the at least one expansion body (1) is arranged between the support element (3) and the bending element (2) that spans the support element (3) in the manner of a diaphragm, and that the support element (3) together with the bending element (2) and expansion body (1) comprises a volume of 1 to 10 mm³, in particular 1 to 3 mm³, and is capable of detecting accelerations of 1000 g and above.

8. The acceleration sensor according to Claim 7,
**characterized in that** the expansion body (1) consists exclusively of piezoresistive material and is permanently joined both to the support element (3) and to the bending element (2).

9. The acceleration sensor according to any one of Claims 1 to 8,
**characterized in that** the expansion body longitudinal extent (D) defines a spatial direction that can be assigned to the expansion body (1) and along which the expansion body (1) deforms, which principally determines the electrically detectable change in resistance.

10. The acceleration sensor according to any one of Claims 1 to 9,
**characterized in that** the support element (3), the bending element (2) and the expansion body (1) are produced from materials that can be processed with semiconductor technology methods.

11. The acceleration sensor according to any one of Claims 2 to 6 and 8 to 10,
**characterized in that** the expansion body (1) consisting of a piezoresistive material has a size and shape by which the expansion body (1) can be expanded and compressed along the expansion body longitudinal extent (D), and is dimensionally stable perpendicular to the expansion body longitudinal extent (D).

12. The acceleration sensor according to any one of Claims 1 to 11,
**characterized in that** the support element (3) at least partially surrounds the bending element (2) and the expansion body (1) and is rigidly connected over at least one outer side of the support element (3) to an object which is exposed to the effect of an acceleration.

## Revendications

1. Capteur d'accélération avec un convertisseur piézorésistif avec un treillis qui présente un élément porteur (3), sur lequel est monté un élément à flexion (2) qui, sous l'effet d'une force, subit une déformation par rapport à l'élément porteur (3), qui possède une fibre (6) neutre dont la longueur est invariable pendant la déformation et sur lequel est monté un corps à extension (1) présentant un matériau piézorésistif, qui convertit la déformation de l'élément à flexion (2) en une modification de la résistance électriquement détectable, pour lequel l'élément porteur (3) et l'élément à flexion (2) délimitent au moins par endroits une fente (S) au moins des deux côtés et au moins un corps à extension (1) est prévu, qui relie par endroits sous la forme d'un pont et de façon saillante l'élément porteur (3) et l'élément à flexion (2) dans la zone de la fente (S) et qui dispose au moins d'un corps à extension (1) sur une étendue longitudinale du corps à extension (D), qui coupe la fibre (6) neutre à un angle α où 35° ≤ α ≤ 145°, en particulier où α = 90°,
**caractérisé en ce que** l'élément porteur (3), l'élément à flexion (2) et le corps à extension (1) sont reliés de façon monolithique,
**en ce que** l'élément à flexion (2) est constitué en forme de plaquettes et est délimité par quatre arêtes latérales dont une arête latérale est jointe solidement directement à l'élément porteur (3) et au moins une autre arête latérale se termine libre et **en ce que** le au moins un corps à extension (1) est disposé sur ou dans la zone de l'arête latérale se terminant libre entre l'élément porteur (3) et l'élément à flexion (2) et **en ce que** l'élément porteur (3) avec l'élément à flexion (2) et le corps à extension (1) occupe un volume de 1 à 10 mm³, en particulier 1 à 3 mm³, et est en mesure de saisir des accélérations de 1000 g et plus.

2. Capteur d'accélération selon la revendication 1,
**caractérisé en ce que** le corps à extension (1) est composé exclusivement d'un matériau piézorésistif et est joint solidement d'une part à l'élément porteur (3) et d'autre part à l'élément à flexion (2).

3. Capteur d'accélération selon la revendication 1 ou 2,
**caractérisé en ce que** l'élément à flexion (2) est joint solidement à l'élément porteur (3) par deux arêtes latérales opposées et les deux autres arêtes latérales se terminent libres et
**en ce que** le au moins un corps à extension (1) est disposé sur ou dans la zone de la au moins une arête latérale se terminant libre entre l'élément porteur (3) et l'élément à flexion (2).

4. Capteur d'accélération selon la revendication 1 ou 2,
**caractérisé en ce que** l'élément à flexion (2) est joint solidement par trois arêtes latérales à l'élément porteur (3) et
l'autre arête latérale se termine libre et **en ce que** le au moins un corps à extension (1) est disposé sur ou dans la zone de la une arête latérale se terminant libre entre l'élément porteur (3) et l'élément à flexion (2).

5. Capteur d'accélération selon la revendication 1 ou 2, **caractérisé en ce que** l'élément à flexion (2) présente un côté supérieur et un côté inférieur,
**en ce que** l'élément porteur (3) comprend l'élément à flexion (2) au moins par endroits de telle sorte que l'élément à flexion (2) délimite deux fentes (S) avec l'élément porteur (3) dont une fente (S) est incluse entre le côté supérieur de l'élément à flexion (2) et l'élément porteur (3) et l'autre fente (S) entre le côté inférieure de l'élément à flexion (2) et l'élément porteur (3),
**en ce que** l'élément à flexion (2) présente au moins deux arêtes latérales s'opposant dont une est jointe solidement à l'élément porteur (3) et l'autre se termine libre ou
**en ce que** l'élément à flexion (2) est joint solidement à l'autre élément porteur (3) par deux arêtes latérales s'opposant et les deux autres arêtes latérales se terminent libres et
**en ce que** le au moins un corps à extension (1) est disposé sur ou dans la zone de la au moins une arête latérale se terminant libre entre l'élément porteur (3) et l'élément à flexion (2).

6. Capteur d'accélération selon la revendication 5,
**caractérisé en ce qu'**au moins deux corps à extension (1) sont prévus localement entre le côté supérieur de l'élément à flexion (2) et l'élément porteur (3), **en ce qu'**au moins deux corps à extension (1) sont prévus entre le côté inférieur de l'élément à flexion (2) et l'élément porteur (3) et **en ce que** les au moins quatre corps à extension (1) sont connectés entre eux en formant un pont de mesure de Wheatstone.

7. Capteur d'accélération selon le préambule de la revendication 1,
**caractérisé en ce que** l'élément porteur (3), l'élément à flexion (2) et le corps à extension (1) sont reliés de façon monolithique,
**en ce que** l'élément à flexion (2) est constitué en forme de plaquettes et est délimité par un bord périphérique,
**en ce que** l'élément à flexion (2) est joint solidement par tout le bord périphérique à l'élément porteur (3) et recouvre en forme de membrane au moins par endroits l'élément porteur (3) et
**en ce que** le au moins un corps à extension (1) est disposé entre l'élément porteur (3) et l'élément à flexion (2) superposant en forme de membrane l'élément porteur (3) et **en ce que** l'élément porteur (3) avec l'élément à flexion (2) et le corps à extension (1) occupe un volume de 1 à 10 mm³, en particulier 1 à 3 mm³ et est en mesure de saisir des accélérations de 1 000 g et plus.

8. Capteur d'accélération selon la revendication 7,
**caractérisé en ce que** le corps à extension (1) est composé exclusivement d'un matériau piézorésistif et est joint solidement d'une part à l'élément porteur (3) et d'autre part à l'élément à flexion (2).

9. Capteur d'accélération selon une quelconque des revendications 1 à 8,
**caractérisé en ce que** l'étendue longitudinale du corps à extension (D) définit une direction spatiale attribuable au corps à extension (1), le long de laquelle le corps à extension (1) se déforme, par lequel la modification de résistance électriquement détectable est principalement déterminée.

10. Capteur d'accélération selon une quelconque des revendications 1 à 9,
**caractérisé en ce que** l'élément porteur (3), l'élément à flexion (2) et le corps à extension (1) sont fabriqués en matériaux qui sont transformables avec des méthodes relevant de la technologie des semi-conducteurs.

11. Capteur d'accélération selon une quelconque des revendications 2 à 6 ainsi que 8 à 10,
**caractérisé en ce que** le corps à extension (1) composé d'un matériau piézorésistif possède une taille et une forme par lesquelles le corps à extension (1) est expansible et refoulable dans l'étendue longitudinale du corps à extension (D) ainsi que stable de forme, transversalement à l'étendue longitudinale du corps à extension (D).

12. Capteur d'accélération selon une quelconque des revendications 1 à 11,
**caractérisé en ce que** l'élément porteur (3) entoure au moins partiellement l'élément à flexion (2) et le corps à extension (1) et peut être relié fermement par au moins un côté extérieur de l'élément porteur (3) avec un objet de mesure exposé à un effet d'accélération.
